# EUROPÄISCHE PATENTSCHRIFT

(11) **EP 1 682 301 B1**
(45) Veröffentlichungstag und Bekanntmachung des Hinweises auf die Patenterteilung: **16.01.2008**
(21) Anmeldenummer: 04797565.1
(22) Anmeldetag: 03.11.2004
(51) Int. Cl.: B23D 61/18, F16G 11/08

(54) **VERSCHLUSS FÜR SEILE**
CLOSURE FOR CABLES
FERMETURE POUR FILS

(30) Priorität: 05.11.2003 DE 20317186 U
(43) Veröffentlichungstag der Anmeldung: 26.07.2006
(73) Patentinhaber: Steiner, Andreas, 5310 Tiefengraben (AT)
(72) Erfinder: STEINER, Andreas, A-5310 Tiefengraben (AT); WINKLER, Wolfgang, A-5303 Thalgau (AT)
(74) Vertreter: Ernicke, Klaus Stefan
(86) Internationale Anmeldenummer: PCT/EP2004/012431
(87) Internationale Veröffentlichungsnummer: WO 2005/044497

(56) Entgegenhaltungen:
- EP-B- 0 680 395
- WO-A-01/90598
- FR-A- 861 864

## Beschreibung

Die Erfindung betrifft einen Verschluss für Seile, insbesondere Sägeseile, und ein Verfahren zum Verbinden und Öffnen von Seilen mit den Merkmalen im Oberbegriff des Verfahrens- und Vorrichtungshauptanspruchs (bekannt aus der WO 01/90598).

Ein derartiger Verschluss ist aus der EP 0 680 395 B1 bekannt. Er dient zum Verbinden der Seilenden eines Sägeseils und besteht aus drei Teilen, die nach Art eines Kardangelenkes ausgebildet sind und mittels zweier Lager um zwei getrennte Achsen miteinander verbunden sind. Durch die kardanartige Ausbildung und die zwei einander kreuzenden Achsen ist der Verschluss flexibel und kann den variablen Seilbiegungen folgen. Der vorbekannte Verschluss besteht aus zwei endseitigen Gabelstücken und einem Zwischenstück, die durch Lagerbolzen drehbar miteinander verbunden sind. Zum Öffnen des Verschlusses muss ein Lagerbolzen gelöst und entfernt werden. Dies ist durch Einsatz eines Schraubbolzens möglich, was allerdings den Nachteil hat, dass ein Schraubwerkzeug erforderlich ist und dass außerdem der Schraubbolzen ständiger Kontrolle und Wartung bedarf, damit er sich nicht im Seilbetrieb von selbst löst. Dies stellt ein Sicherheits- und Unfallproblem dar.

Ein ähnlicher kardanischer Verschluss ist auch aus der FR 1 357 117 bekannt, wobei sich dieser Verschluss allerdings nicht ohne Beschädigung öffnen lässt.

Ein anderer Verschluss in Form eines Kugelverschlusses ist aus der CH 8544 bekannt. Derartige Kugelverschlüsse haben mehrachsige Kugellager, wobei sich die Verschlussteile auf Grund der Kugelform in mehreren Richtungen relativ zueinander drehen können. Die Drehwinkel sind hierbei allerdings stark beschränkt. Derartige Kugelverschlüsse besitzen zudem eine gewisse axiale Beweglichkeit und unterliegen einem erhöhten Verschleiß.

Es ist Aufgabe der vorliegenden Erfindung, einen besseren Verschluss für Seile aufzuzeigen.

Die Erfindung löst diese Aufgabe mit den Merkmalen im Verfahrens- und Vorrichtungshauptanspruch.

Der beanspruchte Verschluss hat den Vorteil, dass der sich dank des trennbaren Drehlagers zwischen den Verschlussteilen und der winkelabhängig lösbaren Lagersicherung ohne Werkzeugeinsatz bequem und einfach öffnen und schließen lässt. In den Betriebsstellungen des Seils ist die Lagersicherung zuverlässig geschlossen, was einfacherweise durch gegenseitiges Drehen der Verschlussteile erfolgt.

Gemäß der Erfindung ist das Drehlager als steckbares Zapfenlager ausgebildet, welches eine definierte Drehachse besitzt, der quer zu der Drehachse eine optimale Führung für die Kraftübertragung zwischen den Verschlussteilen bietet. Axiale Beweglichkeiten wie bei Kugelverschlüssen sind hierdurch ausgeschlossen. Die Lagersicherung wirkt in Längsrichtung der Drehachse und hält dadurch die Verschlussteile und das Drehlager in allen gestreckten und gebogenen Betriebsstellungen des Verschlusses zuverlässig zusammen.

Die Ausgestaltung der Lagersicherung als drehbare Nut und Feder-Führung hat den Vorteil, dass sie bei einem gegenseitigen Verdrehen der Verschlussteile automatisch geschlossen wird. Zusätzliche Bauteile oder Kinematiken sind nicht erforderlich. Die beanspruchte Ausführungsform ist besonders sicher und zuverlässig. Über die Drehbarkeit kann die Führung den verschiedenen Drehstellungen der Verschlussteile im Seilbetrieb folgen, wobei die Lagersicherung in Drehachsenrichtung stets erhalten bleibt. Die Nut und Feder-Führung kann einfach oder in einer optimierten Ausführungsform doppelt vorhanden sein. In dieser Variante ist sie an zwei gegenüber liegenden Seiten der Drehachse und mit Abstand zur Drehachse angeordnet, so dass auch alle Kippmomente von dieser Führung unter Entlastung des Drehlagers aufgenommen werden können.

Die Nut und Feder-Führung lässt sich durch die beanspruchte Ausbildung nur in einer definierten Lösestellung mit etwa 90° Knickwinkel zwischen den Verschlussteilen lösen. Eine solche Knickstellung wird im normalen Seilbetrieb nicht erreicht. Ein Öffnen des Verschlusses ist außerdem nur durch eine definierte und längs der Drehachse gerichtete Auseinanderbewegung der Verschlussteile möglich. Dies verhindert ebenfalls, dass sich der Verschluss im normalen Seilbetrieb öffnen kann.

Für die Verschluss- und Lagerkinematik ist es besonders günstig, wenn sich die Verschlussteile nur an einer Lagerfläche berühren und hier beide vom Lagerbolzen quer durchsetzt werden, wobei der die federbildende Bund an die Lagerfläche unmittelbar anschließt. Auf der anderen Seite geht die Lagerfläche in die Nut über. Bei einer doppelten Nut und Feder-Führung können beide Verschlussteile im Wesentlichen gleich ausgebildet sein, was deren Herstellung und Handhabung vereinfacht und verbilligt. Bei dieser Ausgestaltung wirkt die Lagersicherung unter Entlastung des Lagerbolzens oder -zapfens unmittelbar zwischen den Verschlussteilen und mit Abstand zur Drehachse. Über eine Stufenbildung am Bund und einen Nutenversatz können die zulässigen Betriebswinkel zwischen den Verschlussteilen sehr groß sein, wobei nur in der extremen Endlage die Lösestellung eingenommen werden kann. Durch die im Wesentlichen konzentrische Biegung oder Krümmung des Bundes und der Nut ist in allen Betriebsstellungen des Seils und des Verschlusses eine genügend große Überdeckung von Nutwänden und Bund gegeben. Dies gewährleistet eine sichere Kraftübertragung und Sperrfunktion der Lagersicherungen in allen im Seilbetrieb zulässigen Dreh- und Knickstellungen des Verschlusses.

In der bevorzugten Ausführungsform besteht der Verschluss aus vier Teilen und sitzt ein Mehrfachgelenk mit einer kardanartigen Anordnung von drei oder mehr definierten Dreh- oder Schwenkachsen. Dies bietet eine besonders gute Verschlusskinematik.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: einen mehrteiligen Verschluss für ein Seil in Streckstellung und in Seitenansicht,
- Figur 2:: eine Draufsicht auf den Verschluss von Figur 1,
- Figur 3:: verschiedene Winkelstellungen der Verschlussteile aus der Anordnung von Figur 2,
- Figur 4:: eine Draufsicht auf ein einzelnes Verschlussteil,
- Figur 5:: eine geklappte Seitenansicht des Verschlussteils von Figur 4,
- Figur 6:: eine längs geschnittene Draufsicht auf das Verschlussteil gemäß Figur 4,
- Figur 7:: einen Längsschnitt durch das Verschlussteil gemäß Schnittlinie VII-VII von Figur 4,
- Figur 8 und 9:: nach oben und unten geklappte Stirnansichten des Verschlussteils von Figur 7,
- Figur 10:: eine geklappte Unteransicht des Verschlussteils von Figur 7,
- Figur 11:: eine perspektivische Frontansicht eines Verschlussteils und
- Figur 12:: eine perspektivische Draufsicht auf zwei Verschlussteile in Lösestellung.

Die Erfindung betrifft einen gelenkigen Verschluss (4) für ein Seil (1), vorzugsweise ein Sägeseil, und ein Verfahren zum Öffnen und Schließen eines solchen Seils (1) oder zum Verbinden mehrerer Seile (1). Derartige Sägeseile bestehen aus einem Seilstrang oder einer Seele mit einer Vielzahl von axial im Abstand verteilt angeordneten Schneidperlen aus einem geeigneten abrasiven Material, z.B. Diamantsegmenten. Ein derartiges Sägeseil (1) dient zum Schneiden von Wänden aus hartem Material, z.B. Beton oder Stein. Das Sägeseil (1) ist biegeelastisch und bildet z.B. eine geschlossene Schleife, wobei die beiden Seilenden (2,3) durch den Verschluss (4) miteinander verbunden werden. Alternativ können mittels mehrerer Verschlüsse (4) mehrere Seile (1) untereinander verbunden werden, wobei ein offener Seilstrang beliebiger Länge oder wiederum eine geschlossene Seilschleife von ebenfalls beliebiger Länge entsteht. Das geschlossene Sägeseil (1) wird mittels einer Seilsäge in Umlaufbewegung gesetzt und schneidet dabei das Werkstück. Der gelenkige Verschluss (4) hat im Wesentlichen die gleiche Biegeelastizität wie das Seil (1) und kann somit über Antriebs- und Umlenkrollen sowie auch über Kanten des Werkstücks geführt werden. Alternativ kann das Seil (1) in beliebig anderer Art ausgebildet sein und für beliebige andere Zwecke, z.B. als Schlepp- oder Hubseil, eingesetzt werden.

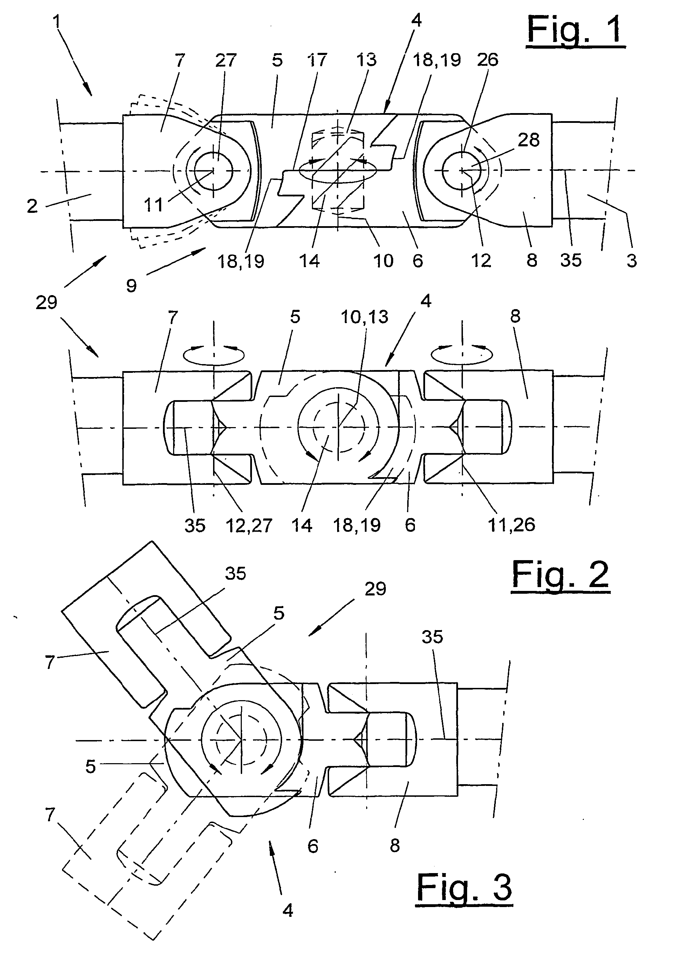

Figur 1 bis 3 zeigen den Verschluss (4) in geschlossener Betriebstellung (29). Figur 1 und 2 verdeutlichen hierbei eine Streckstellung, während Figur 3 verschiedene Betriebswinkel angibt, die auch noch größer als in der Zeichnung sein können.

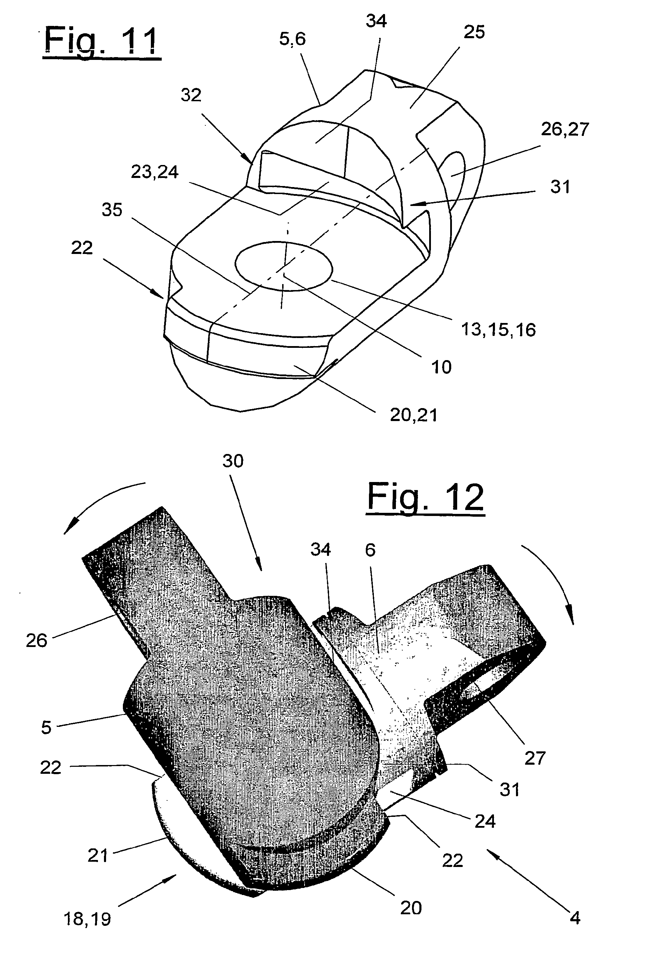

Figur 12 zeigt den Verschluss in einer Lösestellung (30) in der er ohne Zuhilfenahme von Werkzeug geöffnet werden kann. Das geöffnete Seil (1) kann dann in eine gewünschte Betriebsposition gebracht werden, wobei es zum Beispiel über verschiedene Umlenkrollen an einer Seilsägemaschine und an dortigen Führungen eingefädelt wird. Das geöffnete Seil (1) kann außerdem durch Öffnungen oder Kanäle geschoben oder gezogen werden. Ein Sägeseil (1) kann z.B. durch Bohrlöcher am Werkstück durchgesteckt werden. Wenn das Seil (1) in die gewünschte Betriebslage gebracht ist, können die Seilenden (2,3) wieder miteinander verbunden und der Verschluss (4) in die geschlossene Betriebsstellung (29) gebracht werden.

In der gezeigten Ausführungsform besteht der Verschluss (4) aus vier Teilen und besitzt ein Mehrfachgelenk (9), welches vorzugsweise als Dreifachgelenk ausgebildet ist. Das Dreifachgelenk (9) hat drei definierte Achsen (10,11,12) für Dreh- und Schwenkbewegungen der Teile (5,6,7,8) des Verschlusses (4). Der Verschluss (4) besteht zum einen aus zwei Verschlussteilen (5,6), die nachfolgend als Drehteile bezeichnet werden und die über ein gemeinsames Drehlager (13) miteinander drehbar und trennbar verbunden sind bzw. verbunden werden können. Das Verbindungs-Drehlager (13) ist zwischen den Verschlussteilen (5,6) angeordnet. Jedes Drehteil (5,6) ist an seinem jeweils rückwärtigen Ende über ein Schwenklager (26,27) mit einem weiteren Verschlussteil (7,8) verbunden, an dem endseitig jeweils ein Seilende (2,3) befestigt ist. Die Schwenkachsen (11, 12) der Schwenklager (26,27) und ihre Lagerbolzen (28) sind parallel ausgerichtet und verlaufen hierbei quer zu der Drehachse (10) des Drehlagers (13). Figur 1 und 2 zeigen durch Pfeile und durch gestrichelte Darstellungen die Drehbeweglichkeiten der vorzugsweise als Gabelkopf ausgebildeten Verschlussteile oder Schwenkteile (7,8) gegenüber den Drehteilen (5,6).

Der Verschluss (4) kann im Bereich der Drehteile (5,6) und des Verbindungs-Drehlagers (13) geöffnet und geschlossen werden. Hierfür besitzt der Verschluss (4) eine in Abhängigkeit von der Winkelstellung der Drehteile (5,6) lösbare Lagersicherung (18). In den gestreckten Betriebsstellungen (29) von Figur 1 und 2 sowie den abgewinkelten oder gebogenen Betriebsstellungen (29) von Figur 3 ist die Lagersicherung (18) geschlossen und verhindert ein Öffnen des Verschlusses (4) und des Verbindungs-Drehlagers (13). Erst in der in Figur 12 dargestellten Lösestellung (30) mit einem etwa 90° großen Knickwinkel der Verschlussteile (5,6) lässt sich der Verschluss (4) öffnen und schließen.

Das Drehlager (13) ist vorzugsweise als Stecklager ausgebildet und erlaubt ein Zusammenstecken der Drehteile (5,6). Konstruktiv ist das Stecklager vorzugsweise als Zapfenlager ausgebildet. Es wird von zwei ebenen und in Schließstellung plan aneinander liegenden Lagerflächen (17) der beiden Drehteile (5,6) sowie einem die Lagerflächen (17) in Querrichtung durchsetzenden Lagerzapfen (14) mit einer längs gerichteten Drehachse (10) gebildet. Der Lagerzapfen (14) kann in einem Drehteil (6) in einer Zapfenaufnahme (15), zum Beispiel einer Sacklochbohrung, mit Klemmschluss oder über eine Klebeverbindung befestigt sein und greift mit ausreichendem Lagerspiel in eine gegenüberliegende fluchtende Lageröffnung (16), vorzugsweise ebenfalls eine Sacklochbohrung, im anderen Drehteil (5). Alternativ kann der Lagerzapfen (15) auch lose sein und bei Bedarf in die Bohrungen (15,16) eingesteckt und dann in geeigneter Weise fixiert werden.

Bei geöffneter Lagersicherung (18) können die Drehteile (5,6) über den Lagerzapfen (14) und in Richtung der Drehachse (10) zum Schließen des Verschlusses (4) zusammen gesteckt und zum Öffnen auseinander bewegt werden. In Schließstellung greift der Lagerzapfen (14) formschlüssig in die Lageröffnung (16) und verhindert ein Auseinanderziehen der Drehteile (5,6) entlang der Lagerflächen (17).

Die Lagersicherung (18) ist als drehbare gegenseitige Nut und Feder-Führung (19) an den Verschlussteilen (5,6) ausgebildet. Sie ist hierbei vorzugsweise doppelt vorhanden, wobei jedes der Drehteile (5,6) Nut und Feder aufweist. Bei dieser Ausführung können beide Drehteile (5,6) abgesehen von der Lagerzapfenanordnung im wesentlichen gleich ausgebildet sein. Die Nut und Feder-Führung (19) ist um die Achse (10) des Drehlagers (13) gekrümmt, wobei diese Krümmung vorzugsweise im wesentlichen konzentrisch ist. In Teilbereichen können abweichende Krümmungen vorhanden sein.

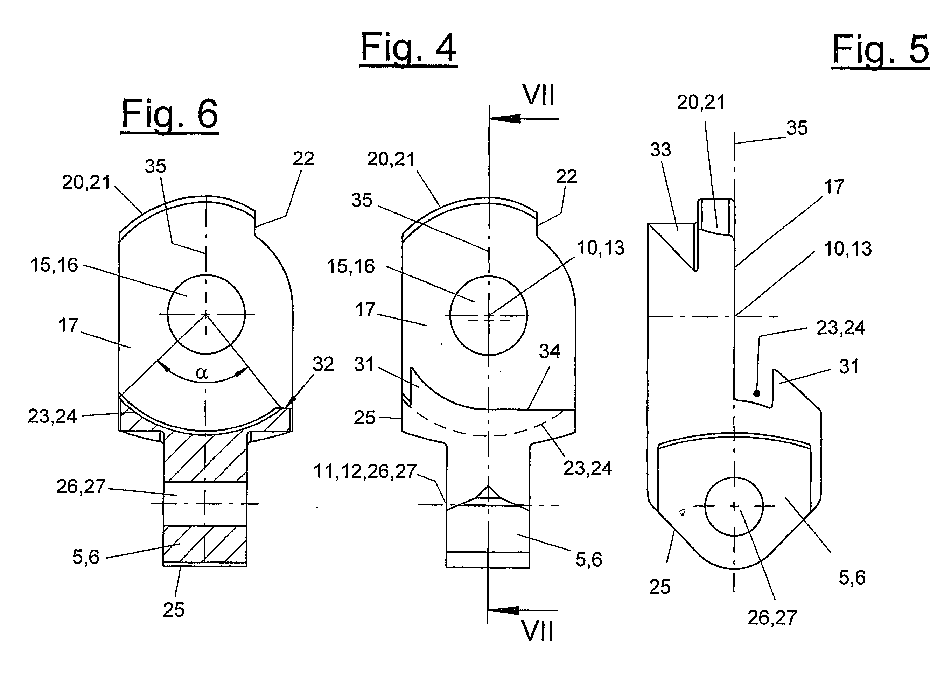

In Figur 4 bis 11 sind die Verschlussteile bzw. Drehteile (5,6) im Detail dargestellt. Die Drehteile (5,6) besitzen jeweils einen abgestuften Korpus (25). Durch die Stufenbildung wird vorzugsweise in der horizontalen Mittelebene bzw. zentralen Längsachse (35) die ebene Lagerfläche (17) freigelegt. In dieser Ebene liegt vorzugsweise auch die Schwenkachse (11,12) für den Anschluss des Gabelkopfes (7,8). In der Lagerfläche (17) sitzen zentral die Bohrungen (15,16).

An dem vorderen freien Rand der Lagerfläche (17) ist ein vorstehender gebogener Bund (20,21) angeordnet, der die Feder für die Nut und Feder-Führung (19) bildet. Die Lagerfläche (17) geht bündig in die Oberseite des Bundes (20,21) über. Der Bund (20,21) hat eine der nachfolgend erläuterten Nut (23,24) entsprechende Dicke oder Höhe. Zur Bildung des Bundes (20,21) springt der Korpus (25) unterhalb der Lagerfläche (17) ein Stück zurück. Am Rand kann hierbei zusätzlich eine Ausklinkung (33) vorhanden sein.

An der rückwärtigen und zum Schwenklager (26,27) weisenden Seite der Lagerfläche (17) ist eine gebogene Nut (23,24) angeordnet, deren Unterseite bündig in die Lagerfläche (17) übergeht. Die Nut (23,24) ist in die stufenartige Erhöhung des Korpus (25) eingeformt. Die Nut (23,24) und der Bund (20,21) erstrecken sich quer zur Längsachse (35) des Drehteils (5,6) und liegen einander diametral zur Drehachse (10) gegenüber. Die Außenwand des Bundes (20,21) und die Innenwand der Nut (23,24) sind im wesentlichen konzentrisch zur zentralen Drehachse (10) gebogen und sind von der Drehachse (10) unter Berücksichtigung des Bewegungsspiels in etwa gleich weit entfernt.

In Betriebsstellung des Verschlusses (4) liegen die Drehteile (5,6) mit ihren Lagerflächen (17) aufeinander, wobei an der einen Seite der Lagerflächen (17) der Bund (20) des einen Drehteils (5) in die Nut (24) des anderen Drehteils (6) formschlüssig eingreift. An der anderen Seite der Lagerfläche (17) greift der Bund (21) des anderen Drehteils (6) in die korrespondierende Nut (23) des einen Drehteils (5). Figur 1 verdeutlicht diese Eingriffsstellung.

Wie Figur 3 verdeutlicht, besteht in allen Betriebsstellungen (29). eine zumindest teilweise Überdeckung und somit formschlüssige Führung zwischen den Bünden (21) und den Nuten (23,24), die ein Lösen des Drehlagers (13) und der Verschlussteile (5,6) in Richtung der Drehachse (10) verhindert. Durch ihre im wesentlichen konzentrisch gebogene Form und ihre radialen Abstände von der Drehachse (10) können sich die Bünde (20,21) und die Nuten (23,24) zwängungsfrei relativ zueinander drehen.

Der Bund (20,21) und die Nut (23,24) besitzen jeweils einen Bogenwinkel von weniger als 90°. Der Bogenwinkel α der Nuten (23,24) ist hierbei größer als derjenige der Bünde (20,21) und beträgt vorzugsweise ca. 85°. Der Bogenwinkel am Bund (20,21) ist noch kleiner.

Wie Figur 4, 6 und 10 verdeutlichen, erstreckt sich der Bund (20,21) jeweils nur über einen Teilbereich der Breite des Verschlussteils (5,6) und ist an einer Seite unter Ausbildung einer Stufe (22) verkürzt. Bei der Draufsicht auf die freiliegende Lagerfläche (17) befindet sich die Stufe (22) an der rechten Seite. Der an die rückspringende Stufe (22) angrenzende Korpusbereich ist konzentrisch zur Drehachse (10) gekrümmt. Diese Krümmung setzt sich auch in dem unterhalb des vorstehenden Bundes (20,21) befindlichen Korpusbereich fort.

Die Vorderseite des Bundes (20,21) hat in dem von der linken Verschlussteilseite ausgehenden und bis zur Mittelachse (35) sich erstreckenden Bereich eine konzentrische Krümmung um die Drehachse (10). Im anschließenden Bereich von der Mittelachse (35) bis zur Stufe (22) kann die Krümmung stärker und der Krümmungsradius kleiner sein. Hierdurch wird eine Art Anlaufkurve zum leichteren Eingleiten in die Nut (23,24) geschaffen.

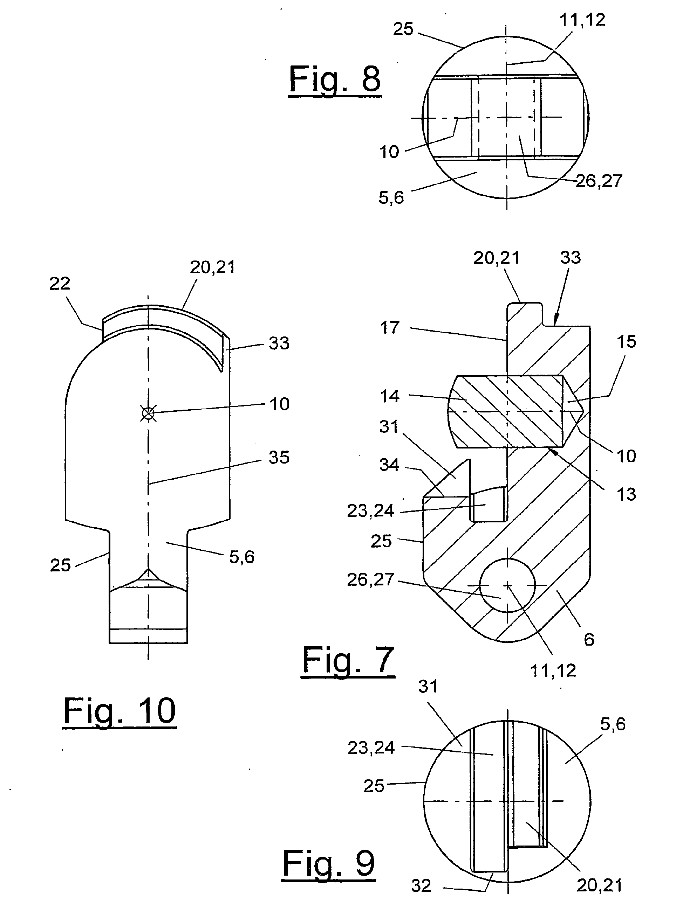

Die Nut (23,24) erstreckt sich ebenfalls nur über einen Teilbereich der Verschlussteilbreite und hat an einer Seite gegenüber dem Verschlussteilrand einen seitlichen Nutenversatz (32). Figur 6 und 9 verdeutlichen diese Ausbildung. Die Stufe (22) und der Nutenversatz (32) liegen hierbei auf der gleichen Seite der Lagerfläche (17).

Wie ferner Figur 4 verdeutlicht, hat die Nut (23,24) eine variable Überdeckung durch den Korpusrand des Drehteils (5,6). Der oberhalb der Lagerfläche (17) liegende Korpusrand schließt zunächst auf der rechten Seite gemäß Figur 4 bündig mit dem Nutenversatz (32) nach oben ab und verläuft hiervon ausgehend in einer geraden Linie im wesentlichen quer zur Mittelachse (35). Die vertikale Korpuswandung bildet in diesem Bereich einen vorzugsweise ebenen Anschlag (34) für die Seitenwand des jeweils anderen Drehteils (5,6). In diesem Bereich vergrößert sich durch die konzentrische Nutenform zunehmend die Korpusüberdeckung bzw. die Nutentiefe. Ab der Mittelachse (35) erstreckt sich die vertikale Korpuswand in einem Bogen bis zum Seitenrand des Drehteils (5,6). Hierdurch bildet die Korpuswand einen axialen Überstand oder Vorsprung, der in der Lösestellung (30) mit der Stufe (22) des zugehörigen Bundes (20) korrespondiert. Figur 12 zeigt diese Ausbildung. In Lösestellung schmiegt sich der gekrümmte Überstand (31) an die entsprechend gekrümmte vordere Korpuswandung im Stufenbereich an.

Durch diese Gestaltung sind die Drehteile (5,6) in der Lösestellung (30) bei geöffneter Nut und Feder-Führung (19) in seitlicher Anlage aneinander geführt und können in Richtung der Drehachse (10) zum Öffnen des Verschlusses (4) relativ zueinander bewegt und zum Öffnen voneinander entfernt werden. Durch diese einseitige Gestaltung der Stufen (22) und Überstände (31) gibt es nur die eine in Figur 12 gezeigte Lösestellung (30) und Winkelstellung der Drehteile (5,6). Bei einer Verdrehung in Gegenrichtung schlagen die Drehteile (5,6) mit ihrer seitlichen Korpuswand an den Überständen (31) an, wobei in dieser Anschlagstellung noch eine Überdeckung der Nut und Feder-Führung (19) vorhanden ist und ein Öffnen des Verschlusses (4) verhindert.

Wie Figur 8, 9 und 11 verdeutlichen, sind die Drehteile (5,6) mit ihrem Korpus (25) im Querschnitt weitgehend konzentrisch zur zentralen Längsachse (35) ausgebildet. Eine Ausnahme bildet der rückwärtige Bereich mit dem Schwenklager (26,27). Hier ist der Korpus (25) verdünnt, um in die Aufnahmegabel der Schwenkteile (7,8) zu passen. Die Schwenkteile (7,8) sind ihrerseits im wesentlichen konzentrisch zur zentralen Längsachse (35) ausgebildet.

Am Bund (20,21) und den Nuten (23,24) können randseitige Phasen vorhanden sein, um Zwängungen bei der Bewegung zu vermeiden. Bewegungsgünstige Schrägen können auch am Korpus (25) der Drehteile (5,6) und an den Schwenkteilen oder Gabelköpfen (7,8) vorhanden sein.

Abwandlungen der gezeigten Ausführungsform sind in verschiedener Weise möglich. Der Verschluss (4) kann z.B. nur zwei Drehteile (5,6) und ein Schwenkteil (7) aufweisen, wobei das eine Seilende (3) mit dem entsprechend geformten Drehteil (6) direkt verbunden wird. Bei dieser Ausgestaltung hat der Verschluss (4) nur zwei Achsen (10,11). Diese Anordnung kann natürlich auch spiegelbildlich umgedreht sein.

In einer anderen Variante kann der Verschluss (4) mehr als vier Teile (5,6,7,8) und mehr als drei Achsen (10,11,12) besitzen. Ferner ist es möglich, eine andere Gestaltung des Drehlagers (13) und der Lagersicherung (18) zu wählen. Die Lagersicherung (18) muss auch nicht wie im gezeigten Ausführungsbeispiel zwischen den Drehteilen (5,6) unmittelbar bestehen, sondern kann zwischen einem Drehteil (5,6) und dem Lagerzapfen (14) vorhanden sein. Die Drehteile (5,6) können zudem zumindest teilweise gabelförmig gestaltet sein und mehr als eine Lagerfläche (17) haben.

### BEZUGSZEICHENLISTE

- 1: Seil, Sägeseil
- 2.: Seilende
- 3: Seilende
- 4: Verschluss, Gelenkverschluss
- 5: Verschlussteil, Drehteil
- 6: Verschlussteil, Drehteil
- 7: Verschlussteil, Schwenkteil, Gabelkopf
- 8: Verschlussteil, Schwenkteil, Gabelkopf
- 9: Mehrfachgelenk, Dreifachgelenk
- 10: Achse, Drehachse
- 11: Achse, Schwenkachse
- 12: Achse, Schwenkachse
- 13: Drehlager lösbar, Zapfendrehlager
- 14: Lagerzapfen
- 15: Zapfenaufnahme, Bohrung
- 16: Lageröffnung; Bohrung
- 17: Lagerfläche
- 18: Lagersicherung
- 19: drehbare Nut und Feder-Führung
- 20: Bund
- 21: Bund
- 22: Stufe, Vorsprung
- 23: Nut
- 24: Nut
- 25: Korpus Verschlussteil
- 26: Schwenklager
- 27: Schwenklager
- 28: Lagerbolzen
- 29: Betriebsstellung
- 30: Lösestellung
- 31: Überstand Korpusrand
- 32: Nutversatz
- 33: Ausklinkung
- 34: Anschlag
- 35: zentrale Längsachse, Mittelachse

## Patentansprüche

1. Verschluss für Seile (1), insbesondere Sägeseile, wobei der Verschluss (4) aus mehreren Teilen (5,6,7,8) besteht, die mittels mehrerer Lager (13,26,27) um mindestens zwei getrennte Achsen (10,11,12) beweglich miteinander verbindbar sind, wobei der Verschluss (4) zwei Verschlussteile (5,6) mit einem trennbaren Drehlager (13) und eine in Abhängigkeit von der Winkelstellung der Verschlussteile (5,6) lösbare Lagersicherung (18) aufweist, **dadurch gekennzeichnet, dass** das Drehlager (13) als ein in Achsrichtung steckbares Zapfenlager ausgebildet ist.

2. Verschluss nach Anspruch 1, **dadurch**
**gekennzeichnet, dass** die Lagersicherung (18) als mindestens eine drehbare gegenseitige und um die Achse (10) des Drehlagers (13) gekrümmte Nut und Feder-Führung (19) an den Verschlussteilen (5,6) ausgebildet ist.

3. Verschluss nach Anspruch 1 oder 2, **dadurch**
**gekennzeichnet, dass** die Lagersicherung (18) bei fluchtenden oder begrenzt gegenseitig abgewinkelten Betriebsstellungen (29) der Verschlussteile (5,6) geschlossen und in einer Lösestellung (30) mit etwa 90° Knickwinkel der Verschlussteile (5,6) lösbar ist.

4. Verschluss nach Anspruch 1, 2 oder 3, **dadurch**
**gekennzeichnet, dass** die Verschlussteile (5,6) jeweils eine ebene Lagerfläche (17) besitzen und einen die Lagerflächen (17) durchsetzenden, zentralen Lagerzapfen (14) zur Bildung des Zapfendrehlagers (13) aufweisen.

5. Verschluss nach einem der vorhergehenden Ansprüche, **dadurch gekennzeichnet, dass** die Verschlussteile (5,6) im wesentlichen gleich ausgebildet sind und einen abgestuften Korpus (25) aufweisen.

6. Verschluss nach einem der vorhergehenden Ansprüche, **dadurch gekennzeichnet, dass** das Verschlussteil (5,6) am vorderen Rand der Lagerfläche (17) einen vorstehenden, gebogenen Bund (20,21) zur Bildung der Feder aufweist.

7. Verschluss nach einem der vorhergehenden Ansprüche, **dadurch gekennzeichnet, dass** das Verschlussteil (5,6) am rückwärtigen Rand der Lagerfläche (17) eine gebogene Nut (23,24) zur Aufnahme der Feder aufweist.

8. Verschluss nach einem der vorhergehenden Ansprüche, **dadurch gekennzeichnet, dass** der Bund (20,21) und die Nut (23,24) einen Bogenwinkel von weniger als 90° aufweisen.

9. Verschluss nach einem der vorhergehenden Ansprüche, **dadurch gekennzeichnet, dass** der Bund (20,21) sich über einen Teilbereich der Verschlussteilbreite erstreckt und an einer Seite unter Ausbildung einer Stufe (22) verkürzt ist.

10. Verschluss nach einem der vorhergehenden Ansprüche, **dadurch gekennzeichnet, dass** die Nut (23,24) sich über einen Teilbereich der Verschlussteilbreite erstreckt und an einer Seite gegenüber dem Verschlussteilrand versetzt (32) ist.

11. Verschluss nach der vorhergehenden Ansprüche, **dadurch gekennzeichnet, dass** die Stufe (22) und der Nutversatz (32) auf der gleichen Seite der Lagerfläche (17) liegen.

12. Verschluss nach einem der vorhergehenden Ansprüche, **dadurch gekennzeichnet, dass** die Nut (23,24) eine variable Überdeckung durch den darüber liegenden Korpusrand des Verschlussteils (5,6) mit einem im wesentlichen geraden Anschlagbereich (34) und einem gebogenen Überstand (31) aufweist.

13. Verschluss nach einem der vorhergehenden Ansprüche, **dadurch gekennzeichnet, dass** der Verschluss (4) vier oder mehr gelenkig verbundene Verschlussteile (5,6,7,8) und ein Mehrfachgelenk (9) mit einer kardanartige Anordnung von drei oder mehr Achsen (10, 11, 12) aufweist, wobei die endseitigen Verschlussteile (7,8) mit den Seilenden (2,3) verbunden sind.

14. Verfahren zum Verbinden und Öffnen von Seilen (1), insbesondere Sägeseilen, mit einem mehrteiligen (5,6,7,8) und mittels mehrerer Lager (13,26,27) um mindestens zwei getrennte Achsen (10,11,12) beweglichen Verschluss (4) wobei zwei Verschlussteile (5,6) des Verschlusses (4) mittels eines trennbaren Drehlagers (13) miteinander verbunden und gelöst werden, und wobei eine lösbare Lagersicherung (18) in Abhängigkeit von der Winkelstellung der Verschlussteile (5,6) betätigt wird, **dadurch gekennzeichnet, dass** das Drehlager (13) als ein Zapfenlager ausgebildet ist und die Verschlussteile (5,6) in Achsrichtung gesteckt werden.

## Claims

1. Closure for cables (1), in particular saw cables, the closure (4) consisting of a plurality of parts (5, 6, 7, 8) which can be connected to one another by means of a plurality of bearings (13, 26, 27) in such a way as to be movable about at least two separate axes (10, 11, 12), the closure (4) having two closure parts (5, 6) with a separable rotary bearing (13) and a bearing locking means (18) releasable as a function of the angular position of the closure parts (5, 6), **characterized in that** the rotary bearing (13) is designed as a pivot bearing which can be pushed in in the axial direction.

2. Closure according to Claim 1, **characterized in that** the bearing locking means (18) is designed as at least one rotatable mutual slot-and-key guide (19), curved about the axis (10) of the rotary bearing (13), on the closure parts (5, 6).

3. Closure according to Claim 1 or 2, **characterized in that** the bearing locking means (18) is closed when the operating positions (29) of the closure parts (5, 6) are aligned or are mutually angled to a limited extent and is releasable in a releasing position (30) with an approximately 90° bend angle of the closure parts (5, 6).

4. Closure according to Claim 1, 2 or 3, **characterized in that** the closure parts (5, 6) each have a flat bearing surface (17) and a central bearing pin (14), passing through the bearing surface (17), for forming the rotary pivot bearing (13).

5. Closure according to one of the preceding claims, **characterized in that** the closure parts (5, 6) are of essentially identical design and have a stepped body (25).

6. Closure according to one of the preceding claims, **characterized in that** the closure part (5, 6), at the front margin of the bearing surface (17), has a projecting, curved collar (20, 21) for forming the key.

7. Closure according to one of the preceding claims, **characterized in that** the closure part (5, 6), at the rear margin of the bearing surface (17), has a curved slot (23, 24) for accommodating the key.

8. Closure according to one of the preceding claims, **characterized in that** the collar (20, 21) and the slot (23, 24) have a curve angle of less than 90°.

9. Closure according to one of the preceding claims, **characterized in that** the collar (20, 21) extends over a section of the width of the closure part and is shortened on one side while forming a step (22).

10. Closure according to one of the preceding claims, **characterized in that** the slot (23, 24) extends over a section of the width of the closure part and is offset (32) on one side relative to the margin of the closure part.

11. Closure according to one of the preceding claims, **characterized in that** the step (22) and the slot offset (32) lie on the same side of the bearing surface (17).

12. Closure according to one of the preceding claims, **characterized in that** the slot (23, 24) is overlapped to a variable extent by the body margin, lying above it, of the closure parts (5, 6) with an essentially straight stop region (34) and a curved projecting length (31).

13. Closure according to one of the preceding claims, **characterized in that** the closure (4) has four or more closure parts (5, 6, 7, 8) connected in an articulated manner and a multiple joint (9) having a cardanic arrangement of three or more axes (10, 11, 12), the end closure parts (7, 8) being connected to the cable ends (2, 3).

14. Method of connecting and opening cables (1), in particular saw cables, having a multi-piece (5, 6, 7, 8) closure (4) movable about at least two separate axes (10, 11, 12) by means of a plurality of bearings (13, 26, 27), two closure parts (5, 6) of the closure (4) being connected to one another and released by means of a separable rotary bearing (13), and a releasable bearing locking means (18) being actuated as a function of the angular position of the closure parts (5, 6), **characterized in that** the rotary bearing (13) is designed as a pivot bearing and the closure parts (5, 6) are pushed in in the axial direction.

## Revendications

1. Fermeture pour câbles (1), en particulier pour câbles de scie, la fermeture (4) ayant plusieurs parties (5, 6, 7, 8) qu'il est possible de relier les unes aux autres de manière à pouvoir tourner autour d'au moins deux axes (10, 11, 12) distincts à l'aide de plusieurs coussinets (13, 26, 27), la fermeture comportant deux pièces de fermeture (5, 6) munies d'un coussinet pivotant (13) séparable et une sûreté de coussinet (18) amovible en fonction de la position angulaire des pièces de fermeture (5, 6), **caractérisée en ce que** le coussinet pivotant (13) est conçu comme un coussinet de tourillon à enfiler en direction axiale.

2. Fermeture selon la revendication 1, **caractérisée en ce que** sur les pièces de fermeture (5, 6) la sûreté de coussinet (18) consiste en au moins un guidage à languette et rainure (19) en rotation réciproque et recourbé autour de l'axe (10) du coussinet pivotant (13).

3. Fermeture selon la revendication 1 ou 2, **caractérisée en ce que** la sûreté de coussinet (18) est fermée, lorsque les pièces de fermeture (5, 6) ont des positions de fonctionnement (29) alignées ou font un coude délimité l'une par rapport à l'autre et est amovible dans une position de détachement (30), lorsque l'angle de courbure des pièces de fermeture (5, 6) est d'environ 90°.

4. Fermeture selon la revendication 1, 2 ou 3, **caractérisée en ce que** les pièces de fermeture (5, 6) ont chacune une surface d'appui (17) plane et un tourillon (14) central qui traverse les surfaces d'appui (17) pour former le coussinet pivotant de tourillon (13).

5. Fermeture selon l'une des revendications précédentes, **caractérisée en ce que** les pièces de fermeture (5, 6) sont sensiblement identiques et ont un corps (25) en gradin.

6. Fermeture selon l'une des revendications précédentes, **caractérisée en ce que**, pour former la languette, la pièce de fermeture (5, 6) a un épaulement (20, 21) courbe et saillant sur le bord avant de la surface d'appui (17).

7. Fermeture selon l'une des revendications précédentes, **caractérisée en ce que**, pour recevoir la languette la pièce de fermeture (5, 6) a une rainure (23, 24) courbe sur le bord arrière de la surface d'appui (17).

8. Fermeture selon l'une des revendications précédentes, **caractérisée en ce que** l'épaulement (20, 21) et la rainure (23, 24) font un coin d'arc inférieur à 90°.

9. Fermeture selon l'une des revendications précédentes, **caractérisée en ce que** l'épaulement (20, 21) s'étend sur une partie de la largeur de la pièce de fermeture et est plus court d'un côté, en formant un gradin (22).

10. Fermeture selon l'une des revendications précédentes, **caractérisée en ce que** la rainure (23, 24) s'étend sur une partie de la largeur de la pièce de fermeture et est décalée (32) d'un côté par rapport au bord de la pièce de fermeture.

11. Fermeture selon l'une des revendications précédentes, **caractérisée en ce que** le gradin (22) et le décalage de rainure (32) se trouvent du même côté de la surface d'appui (17).

12. Fermeture selon l'une des revendications précédentes, **caractérisée en ce que** la rainure (23, 24) a un recouvrement variable, grâce au bord de corps - de la pièce de fermeture (5, 6) - placé par-dessus, comportant une zone de butée (34) pratiquement rectiligne et une extrémité saillante (31) recourbée.

13. Fermeture selon l'une des revendications précédentes, **caractérisée en ce que** la fermeture (4) comporte quatre pièces de fermeture (5, 6, 7, 8) ou plus reliées par articulation et une articulation multiple (9) à trois axes (10, 11, 12) ou plus disposés à la Cardan, les pièces de fermeture (7, 8) terminales étant reliées aux extrémités de câble (2, 3).

14. Procédé pour relier ou pour ouvrir des câbles (1), en particulier des câbles de scie, grâce à une fermeture (4) en plusieurs parties (5, 6, 7, 8) et mobile autour d'au moins deux axes (10, 11, 12) distincts à l'aide de plusieurs coussinets (13, 26, 27), deux pièces (5, 6) de la fermeture (4) étant reliées l'une à l'autre et détachées à l'aide d'un coussinet pivotant (13) séparable et une sûreté de coussinet (18) amovible étant actionnée en fonction de la position angulaire des pièces de fermeture (5, 6),
**caractérisé en ce que** le coussinet pivotant (13) est conçu comme un coussinet de tourillon et les pièces de fermeture (5, 6) sont enfilées en direction axiale.
